# EUROPEAN PATENT SPECIFICATION

(11) **EP 1 623 661 B1**
(45) Date of publication and mention of the grant of the patent: **23.05.2007**
(21) Application number: 05381038.8
(22) Date of filing: 02.08.2005
(51) Int. Cl.: A47J 43/18

(54) **Multi-positionable ham holder**
Mehrfach positionierbarer Schinkenhalter
Support multi-positionnable pour jambon

(30) Priority: 04.08.2004 ES 200401947 U
(43) Date of publication of application: 08.02.2006
(73) Proprietor: Tomas Martinez, Antonio, 46182 La Cañada - Paterna (ES); Tomas Martinez, Pacual, 46182 La Cañada - Paterna (ES)
(72) Inventor: Tomas Martinez, Antonio, 46182 La Cañada - Paterna (ES); Tomas Martinez, Pacual, 46182 La Cañada - Paterna (ES)
(74) Representative: Sanz-Bermell Martinez, Alejandro

(56) References cited:
- WO-A-96/03068
- ES-A1- 2 120 302
- ES-A1- 2 167 169
- ES-A1- 2 178 949
- ES-U- 293 674
- US-A- 2 176 149

## Description

The technical field involved in this invention is that of ham holders or clamps, of the sort that secure the leg of ham in order to facilitate cutting the slices of cured meat in the best way to ensure the user's convenience, both in the tasks of slicing the ham and for cleaning and preparing the side parts to remove the fat, rind, etc.

### Prior state of the art

ES 1032773 for a ham holder with a structure consisting of two parallel triangles between which there is a frame and which has a guide holding a support that can be moved along said guide with a clamp attachment for the ham.

ES2190693 for an articulated and rotatable ham holder, with a rotatable part held on the vertical frame or base which holds the ham, and which can be set in different angular positions and lock the rotatable part at the front or the rear of the inner bushing.

ES2178949 for a rotatable ham holder, consisting of a structure with a double support, both parts joined to the base, so as to have a securing piece for the thicker part of the ham, which is rotatable and fitted with a cross-piece and a central spike, and a securing piece for the leg, similarly rotatable after the securing screw has been released.

ES2167169 for a ham holder which includes a rotatable circular part at one end of the frame and another also rotatable at the opposite end, the first for the leg and the second in pincer shape for the thicker end. The rotatable item emerges from a mast and has a tightening part for locking rotation and a mechanism for locking the leg in the rotatable device.

ES1057085 for a retaining arrangement for multi-positioning of hams and shoulders, consisting of a rotatable head provided with two tightening screws which hold the leg, set on one rotatable circle on another connected to a support.

ES 1048244 for an improved ham holder, consists of a support structure forming two columns, one for supporting the shoulder part in a "V" shape and another formed of a circle fitted with two adjustments, one for rotation and another for pressure on the leg, this one being able to adopt a selectable tilt or an appropriate elevation.

ES1030492 for an improved ham holder, consists of a base which has a dual telescopic bar whose ends emerge and sustain two securing devices; one for the leg, with a support set in a rotatable medium and another, also set in a rotatable medium, for the thicker part, the latter being fitted with two pairs of jaws.

ES 1028640 for an improved ham holder consists of a base from which a frame emerges, holding a dual concentric rotatable ring fitted with two screws, one at one end of the ring and another at the part next to this.

The object of this invention is a Multi-positionable ham holder, appropriate for being placed on the wall as well as on a table top, fitted with a device for holding the leg and a device for moving the body of the ham along a curved guide which determines different orientations and different inclinations of the whole assembly, which is released or fixed by means of a single lever, so as to allow any kind of intervention for cutting this with a ham knife, at the same time as enabling the user to continuously modify the position of the ham in respect of the support if the cut requires this.

In order to make the following explanation clearer, five sheets of drawings are enclosed representing the essence of this invention in eight figures.

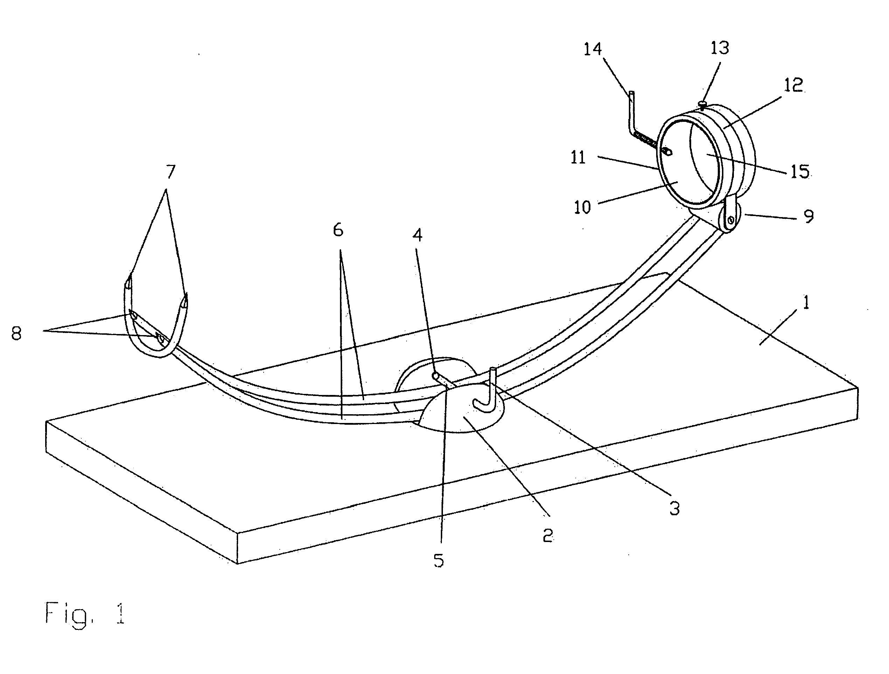

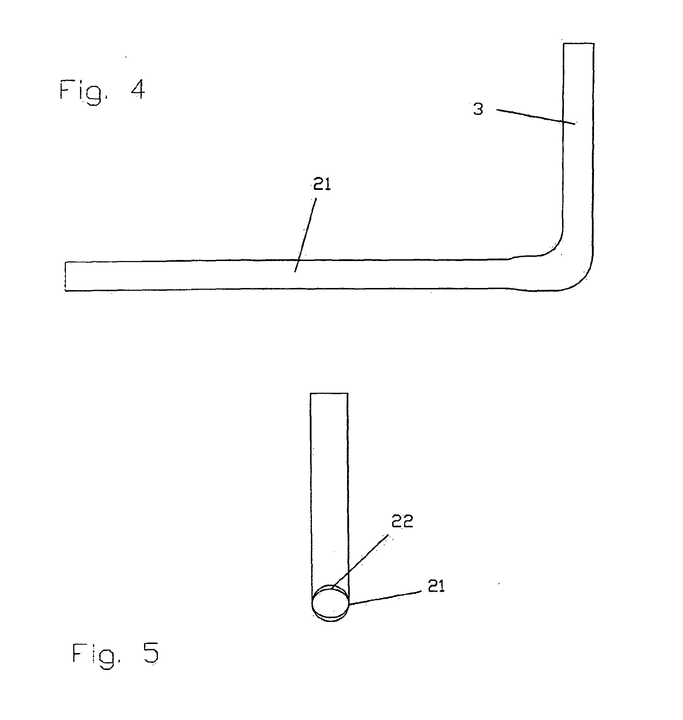

- Figure 1: shows a view of the ham holder as a whole

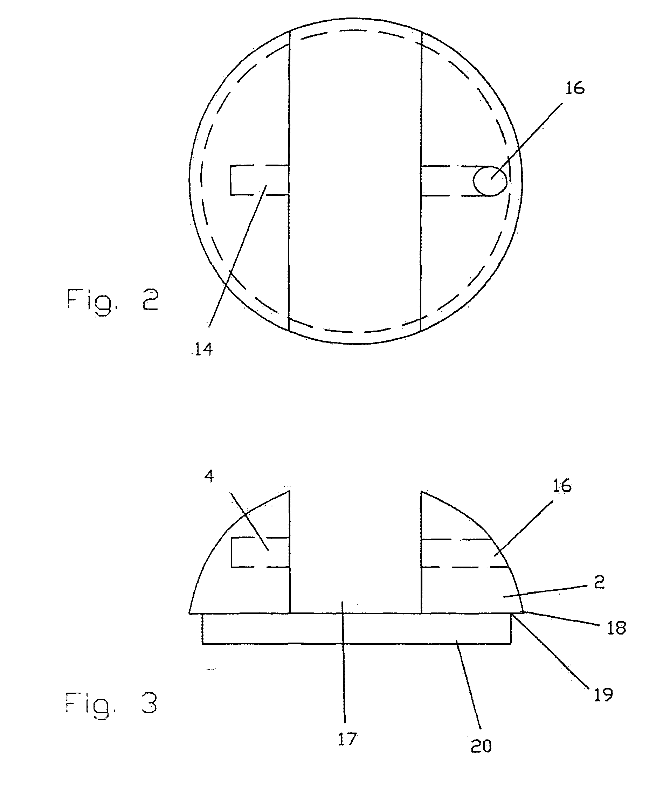

- Figure 2: shows a view of the securing base from above
- Figure 3: shows a view of the securing base in elevation

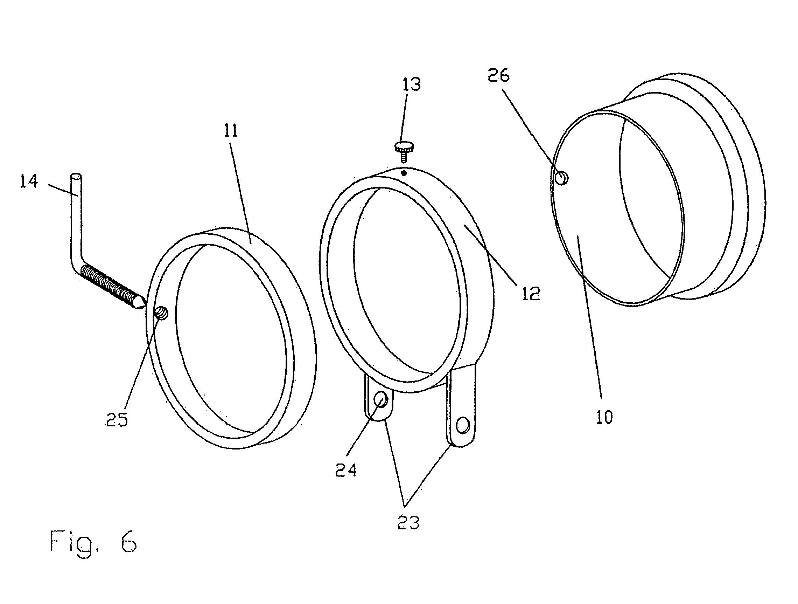

- Figure 4: shows a view of the securing bar
- Figure 5: shows a detail of the securing bar
- Figure 6: shows an exploded view of the rotatable device
- Figure 7: shows a view of the securing base with the bars of the ham holder and the securing bar in released position.
- Figure 8: shows a view of the securing base with the ham holder bars and the securing bar set in a locked position.

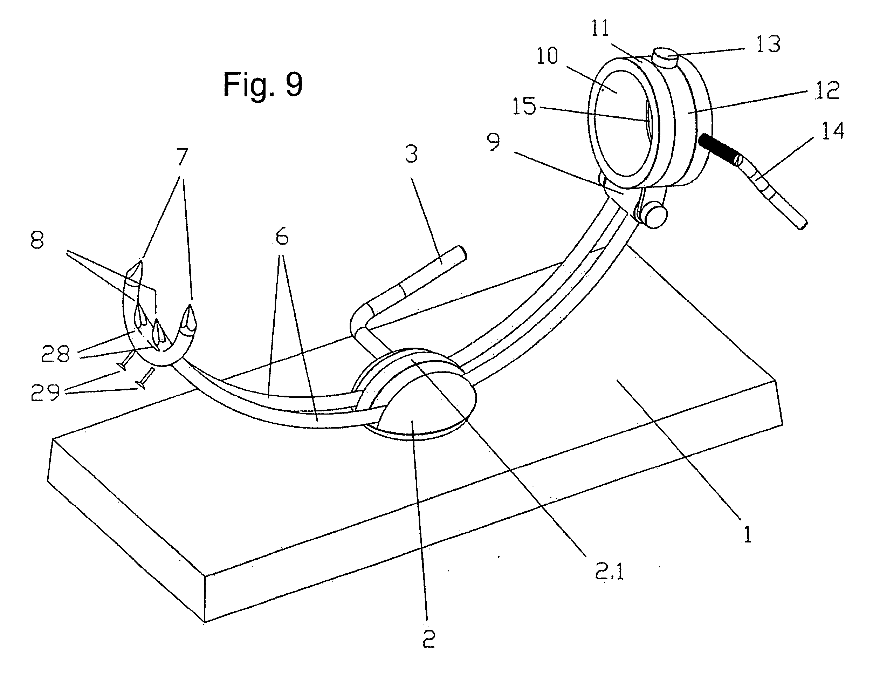

- Figure 9: shows a view of the assembly, provided with a central reinforcement.

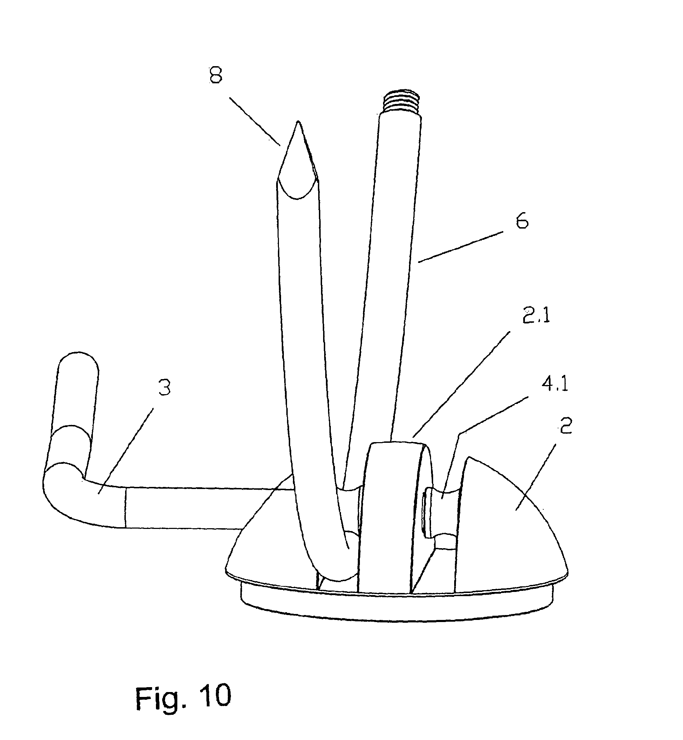

- Figure 10: shows a detail of the central reinforcement.

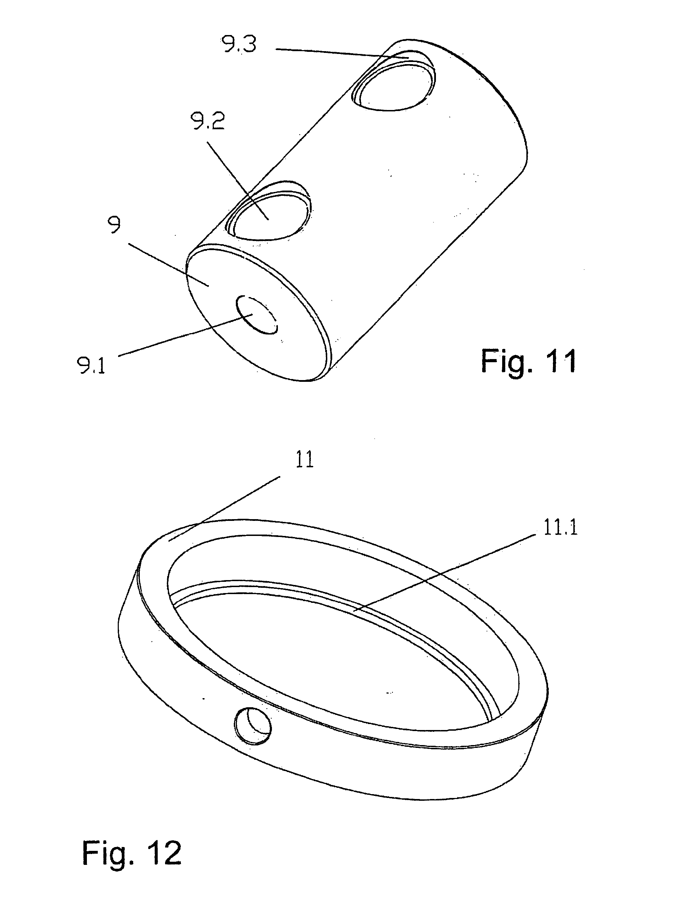

- Figure 11: shows a detail of a piece of variable inclination.

In said figures the following items are represented by the numbers:
- 1: ham holder support structure, consisting of a regular or irregular piece of material, with decorations or without these
- 2: securing part for the bars 6 of the ham support
- 2.1: central part of the securing part which receives the bars 6 in its sides and fixes them in such position
- 3: securing lever for holding the bars 6 to the securing item 2
- 3.1: is the position of the lever in locking position
- 4: hole where the lever is inserted in the securing item 2

- 4.1: socket-guide; receives the eccentric by its interior and its surface, mainly coincident with the profile of the pieces 6, helps the fixation
- 5: eccentric central part of the securing item
- 6: bars for supporting the ham
- 7: spikes at the end of the bars
- 8: spikes at the end of the bar facing outwards
- 9: coupling between the bars 6 and the part for joining to the leg
- 9.1: holes for the articulation of the rotatable device
- 9.2: holes for passing the bars through
- 9.3: external lips of the holes 9.2
- 10: rotatable body
- 11: external ring, connected to the body 10
- 11.1: narrowing flange produced in the external ring 10, avoids to be introduced in excess and that undesired friction to be produced with the neighbour part 12
- 12: central ring, joined to the coupling 9
- 13: securing screw between the central ring 12 and the rotatable body 10. The pressure on the screw holds both together
- 14: lever of the securing screw for the leg
- 15: hollow for inserting the leg
- 16: hole through which the securing item is inserted, and in particular the eccentric part 5
- 17: lower part of the securing part 2 which acts as a support for the support bars 6
- 18: angle of the securing item 2
- 19: projection of the lower part of the securing part 2; this is inserted in the structure 1 with the function of preventing dust or dirt from getting into said base 2
- 20: lower part of the base 2, that can be held to the structure 1 by means of screws or adhesive
- 21: eccentric part of the bar 5; larger radius of the eccentric item
- 22: shape of the eccentric part of the bar 5; lesser radius of the eccentric part
- 23: securing tabs between the bars 6 and the coupling 9 of the central ring 12
- 24: holes for securing in the tabs 23
- 25: way through for the lever 14 in the external ring 11
- 26: way through for the lever 14 in the rotatable body 10
- 27: gap between the bars 6 and the central part 5 of the lever 3 in its eccentric position 22
- 27.1: pressure between the bars 6 and the central part 5 of the lever 3 in its eccentric position 21.
- 28: coplanar recess between the bars 6 and the part with the spikes 7
- 29: screws for the fixation of the coplanar parts in 28

### Explanation of one form of embodiment

The structure 1 constitutes a heavy and tough means of support for table-top use. The securing item 2 is arranged so that its edge drops at an angle 18, fitting perfectly onto the surface 1 so that this does not accumulate dirt, or is at least easily cleanable. The lower part of the base 20 is able to be held by means of screws at the bottom, by adhesive or both to the hollow made in the support structure 1.

Said securing part can be installed in any position and carry out the function, either as support structure 1 fixed to the wall, or set on a table top.

The securing part 2 has a lower part 17 which constitutes the support of the bars for holding the ham 6, so that these bars, which are curved, enable it to be set at any point along the ham. This makes it easier for the user to place the leg in a higher position, the thicker part in a higher position and any intermediate position.

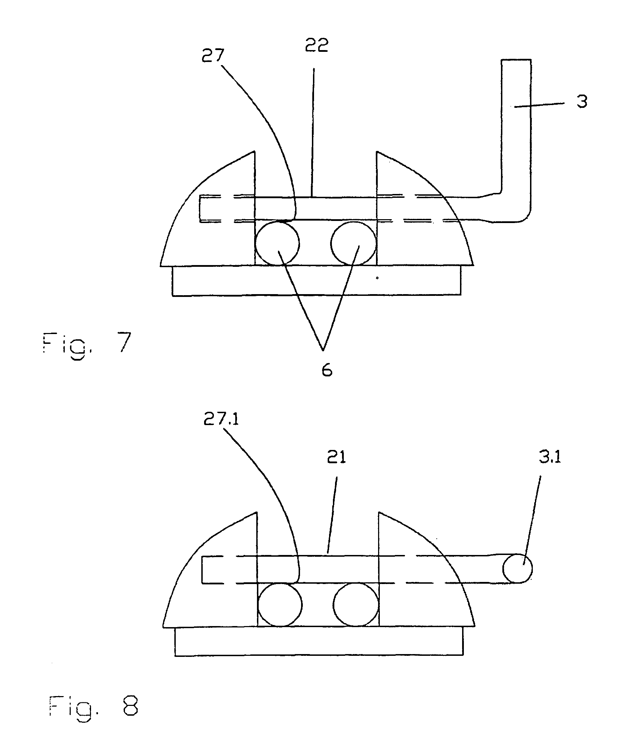

The device for securing the support bars 6 to the securing item 2 consists of a bore in item 2, a through hole 16 and a further blind one 4, set at a height in respect of the lower part 17, adjusted to the height or thickness of the bars 6. In said holes it has a lever 3 which is formed of an "L" shaped part with an eccentric part 5. This eccentricity allows the part with greater diameter 21 to be the one that engages against the bars, insofar as the part with lower diameter 22 is the one that allows the bars to remain free and thus able to move. To move any distance it may be preferable to remove the lever 3. The form of securing them is appreciated in figures 7, releasing position, and in figure 8 the securing position, depending on the position 3.1 of the lever.

The device for turning and securing the leg consists of a part 12 which is fixed and has a ring, tabs 23 and in these holes 24 for securing them in the coupling 9. This ring 12 is inserted in a rotatable body 10, which has a recess along which the ring is fitted. Said rotatable body 10 also has a third ring 11 fitted with a lever 14 with a securing screw, which is inserted in its hole 25 coinciding with the hole 26 of the rotatable body 10. In this way the ring 12 is blocked between the body 10 which is rotatable and the external ring 11 which is held to the former by holes 25 and 26, and thus to the leg of ham.

The central ring 12 is therefore free. It can nevertheless be fixed by means of a small manual screw 13 which exerts pressure on any part of the rotatable body 10, so that simple manual pressure fixes or releases the rotation of the ham whose leg is held by the screw of the lever 14.

The ham can thus take any position in respect of the base. One end of the bars 6 is fitted with spikes in two directions: a set of two spikes angled roughly perpendicularly to the position of the bars 6 and others set along this, and as pointed end of these.

A central reinforcement 2.1 has been previewed which is set between the two external walls of the securing part 2, in such a way that it avoids the displacement of the bars 6, approaching to each other, when they are pressed by the eccentric. The pressure is also exerted by means of the socket-guides 4.1 which have a shape adapted to the profile of said bars 6, in such a way that they exert a pressure on a large common surface, so with a small effort an optimal immobilization is achieved.

The rotatable device has an external ring 11 having a flange 11.1; This facilitates that this part do not reach to friction with central ring 12, since it cannot be displaced to said ring 12, in such a way that it remains free to rotate avoiding any contact with the ring 12. The flange is placed in the external part of said ring 11.

The spikes at the end of the bars placed on a body with approximately "U" shape have a shape coplanar 28 with the bars 6, in such a way that it can be secured by means of at least a fixing screw, avoiding any welding, and being the screw placed in the lower part so it is not visible.
The part 9 of insertion of the end of the bars 6 in the articulation of variable inclination which holds the rotatable part avoids the welding, which produces a bad esthetical effect, and while enhancing the aesthetics, helps the assembling of the bars and the articulation of variable inclination in the ends of 9. Thus, the union between the bars 6 and the rotatable part which holds the leg is constituted by the piece which articulates the rotatable head in the opposite holes 9.1 so it is a swivel of variable inclination, and holes 9.2 for passing the bars 6 through them with external lips 9.3 in the external part of said holes 9.2, in such a way that each of the bars are inserted without welding.

This is for industrial application in making ham holders.

## Claims

1. Multi-positionable ham holder, of the sort that consists of a means for holding the leg, conveniently a pressure screw and a means for supporting the thicker part of the ham, **characterised in that** this includes:
- A support structure (1) able to be installed on a horizontal or vertical surface.
- A securing part (2) set in said support structure, **characterized by**:
- Bars (6) which have a concave-curved shape and which have at their ends means for securing the leg of a ham and means for sticking in the opposite end of the hem; these bars are able to run along said securing part (2).
- A mechanism for releasing/securing the bars (6) in respect of the securing part (2).

2. A Multi-positionable ham holder, according to claim 1, **characterised in that** the securing part (2) is provided with an acute outer edge (18) and a lower part slightly withdrawn in respect of said edge (18), which marks out the separation of the lower part (20) of said part (2).

3. Multi-positionable ham holder, according to claim 1, **characterised in that** the support structure (1) has a recess made in this corresponding to the base of the securing item (2), so that the lower part (20) of the securing part (2) is inserted and adhered to or screwed to this at the bottom.

4. Multi-positionable ham holder, according to claim 1, **characterised in that** the securing part (2) has a blind hole (4) and a through-hole (16) one located in alignment with the other.

5. Multi-positionable ham holder, according to claims 1 and 4 **characterised in that** the mechanism for securing/releasing the bars (6) in respect of the securing part (2) is formed of a lower part (17) which constitutes the support of the bars (6) with the blind (4) and through (16) holes aligned with the line defined between the two bars (6), so that these are able to be pressed or released from said pressure by a lever (3) endowed with an eccentric central part (5); the eccentricity of this part (5) is formed of an oval arrangement of said central part, so that this has a larger radius (21) and a lesser radius (22).

6. Multi-positionable ham holder, according to claim 1, **characterised in that** one end of the bars (6) is fitted with spikes (8), and the proximate part of said bars to their ends is fitted with a part similarly provided with spikes (7) substantially perpendicular to said bars.

7. Multi-positionable ham holder, according to claim 1, **characterised in that** it has at one end a coupling (9) between the bars (6) and fixing tabs (23) endowed with holes (24) for said coupling, set in a ring (12). Said ring (12) is concentric to a rotatable body (10) with an edge, and able to house a further ring (11) which is set in the opposite end to the edge and which has a threaded hole (25) for a lever (14) which similarly goes through a hollow (26) set in the rotatable body (10); it has a locking device in the ring (12) formed by at least one securing screw (13) so that this establishes a pressure from the ring (12) which holds it against the ring (10), which insofar as said pressure is applied is locked against the ring (12).

8. Multi-positionable ham holder, according to claim 1, **characterised in that** it has a central reinforcement (2.1) which is set between the two external walls of the securing part (2), in such a way that the displacement of the bars 6 to each other is avoided , when are pressed by an eccentric, being this pressure exerted through socket-guides (4.1) which have a curved shape adapted to a part of the curve profile of these bars (6), so the pressure between the bars 6 and the socket-guides (4.1) is exerted on a large common surface.

9. Multi-positionable ham holder, according to claim 1, **characterised in that** it comprises a rotatable device with a rotatable ring (11) provided with a flange (11.1) placed in the external part of said ring (11), in such a way that said ring has an axial dimension lower than the distance from said flange (11.1) to the central ring (12).

10. Multi-positionable ham holder, according to claim 1, **characterised in that** it has a body with "U" shape which in their ends form spikes (7) and has a coplanar shape (28) with the bars (6) in such a way that it has a common surface for being secured by means of at least a securing screw (29), without welding, being said screw placed preferable from the lower part.

11. Multi-positionable ham holder, according to claim 9, **characterised in that** the part (9) of insertion of the end of the bars (6) into the articulation of variable inclination which holds the rotatable ring (11); has opposite holes (9.1) for the inclination and opposite holes (9.2) for the insertion and securing the bars (6).

## Patentansprüche

1. Ein multipositionierbarer Schinkenhalter der Sorte, der aus einem Hilfsmittel besteht, um die Keule in geeigneter Weise durch eine Druckschraube zu halten, und einem Hilfsmittel, um den dickeren Teil des Schinkens abzustützen, welcher umfasst:
• Eine Halterungsstruktur (1), geeignet um auf einer horizontalen oder vertikalen Oberfläche angebracht zu werden.
• Ein absichernder Teil (2), eingesetzt in besagte Halterungsstruktur.
• Stangen (6), die eine konkav gebogene Form haben und die an ihren Enden Hilfsmittel zur Sicherung der Schinkenkeule und auf der gegenüberliegenden Seite Hilfsmittel zur Befestigung des Schinkens haben, diese Stangen können entlang dem besagten absichernden Teil (2) zu verlaufen.
• Ein Mechanismus zur Lockerung und Sicherung der Stangen (6) bezüglich des sichernden Teils (2).

2. Ein multipositionierbarer Schinkenhalter, nach Anspruch 1, bei dem der absichernde Teil (2) mit einer feinen Außenkante (18) ausgestattet ist sowie mit einem niedrigeren Teil, der etwas zurückgezogen von besagter Kante ist (18), was die Abtrennung des niedrigeren Teils (20) vom besagten Teil (2) bestimmt.

3. Ein multipositionierbarer Schinkenhalter, nach Anspruch 1, bei dem die Halterungsstruktur (1) eine Aussparung hat, angefertigt entsprechend der Grundlage des absichernden Elements (2), sodass der niedrigere Teil (20) der absichernden Teils (2) in dieses auf dem Boden eingefügt und angehängt oder an dieses festgeschraubt ist.

4. Ein multipositionierbarer Schinkenhalter, nach Anspruch 1, bei dem das absichernde Teil (2) eine Sackbohrung (4) und eine Durchgangsbohrung (16) hat, eins in Abgleich mit dem anderen ausgerichtet.

5. Ein multipositionierbarer Schinkenhalter, nach den Ansprüchen 1 und 4, bei dem der Mechanismus zur Sicherung und Lockerung der Stangen (6) bezüglich des absichernden Teils (2) durch ein niedrigeres Teil (17) gebildet wird, welches die Abstützung der Stangen (6) durch die Sack- (4) und Durchgangsbohrungen (16) ausmacht, welche auf die zwischen den beiden Stangen (6) definierte Linie abgestimmt sind, sodass diese durch einen Hebel (3), der mit einem exzentrischen zentralen Teil (5) ausgestattet ist, vom besagten Druck eingepresst oder gelockert werden können; die Exzentrizität dieses Teils (5) wird durch eine ovale Anordnung des besagten zentralen Teils ausgebildet, sodass dieses einen größeren Radius (21) und einen geringeren Radius (22) hat.

6. Ein multipositionierbarer Schinkenhalter, nach Anspruch 1, bei dem ein Ende der Stangen (6) mit Stiften (8) ausgerüstet ist, und der benachbarte Teil der besagten Stangen an ihren Enden mit einem ähnlich mit Stiften ausgestatteten Teil (7) ausgerüstet ist, im Wesentlichen lotrecht zu besagten Stangen.

7. Ein multipositionierbarer Schinkenhalter, nach Anspruch 1, der an einem Ende eine Ankopplung (9) zwischen den Stangen (6) und der Befestigungsstreifen (23) mit Löchern (24) für die besagte Ankopplung hat, eingesetzt in einen Ring (12). Besagter Ring (12) ist konzentrisch zu einem drehbaren Körper (10) mit einer Kante, und kann einen weiteren Ring (11) aufnehmen, der in das gegenüber liegende Ende der Kante eingesetzt wird und der ein Gewindeloch (25) für einen Hebel (14) hat, welcher in ähnlicher Weise durch ein Loch (26) geht, das im drehbaren Körper (10) eingelassen ist; es gibt eine Feststellvorrichtung in dem Ring (12), gebildet durch mindestens eine Sicherungsschraube (13), sodass dies einen Druck von dem Ring (12) aufbaut, der ihn gegen den Ring (10) drückt, welcher sich insofern als der besagte Druck aufgebracht ist, in Abhängigkeit von dem Ring (12) sperrt.

8. Ein multipositionierbarer Schinkenhalter, nach Anspruch 1, der eine zentrale Armierung hat (2.1), die zwischen den beiden äußeren Wänden des absichernden Teils (2) eingesetzt wird, sodass die gegenseitige Verschiebung der beiden Stangen (6) vermieden wird, wenn diese von einem Exzenter unter Druck gesetzt werden, wird dieser Druck durch Führungsfassungen (4.1) ausgeübt, die einen gebogene Form haben, die an einen Teil der Profilkurve der Stangen (6) angepasst ist, sodass der Druck zwischen den beiden Stangen (6) und der Führungsfassung (4.1) auf einer großen gemeinsamen Fläche ausgeübt wird.

9. Ein multipositionierbarer Schinkenhalter, nach Anspruch 1, der eine Drehvorrichtung mit einem drehbaren Ring (11) beinhaltet, die mit einem Flansch versehnen (11.1) ist, der so am äußeren Teil des besagten Rings (11) platziert ist, dass der Ring eine axiale Dimension tiefer liegt, als die Distanz vom besagten Flansch (11.1) zum zentralen Ring (12) beträgt.

10. Ein multipositionierbarer Schinkenhalter, nach Anspruch 1, in "U" - Form, dessen Enden in Stiften (7) enden und der eine planparallele Form (28) der Stangen (6) hat, sodass eine gemeinsame Oberfläche zur Absicherung an Hand von mindestens einer Sicherheitsschraube (29), ohne Schweißen, entsteht, indem die besagte Schraube vorzugsweise vom niedrigeren Teil aus platziert wird.

11. Ein multipositionierbarer Schinkenhalter, nach Anspruch 9, der an dem Teil (9) der Einfügung der Enden der Stangen (6) in das Gelenk der variablen Neigung, das den drehbaren Ring (11) hält, gegenüber liegende Löcher (9.1) für die Neigung und gegenüber liegende Löcher (9.2) für die Einfügung und Sicherung der Stangen (6) hat.

## Revendications

1. Support pour découper du jambon à plusieurs positions, formé d'un moyen pour tenir la patte, une vis convenable pour faire pression, et un moyen pour appuyer le jambon, **caractérisé par le fait qu'**il comprend :
- Une structure d'appui (1) susceptible d'être installée sur une superficie horizontale ou verticale
- Une pièce de fixation (2) disposée sur ladite structure d'appui, **caractérisée par le fait qu'**elle comprend :
- Des barres (6) qui possèdent une forme courbe et concave et qui possèdent à leurs extrémités des moyens pour fixer la patte d'un jambon et des moyens pour planter la partie opposée à celle-ci; lesdites barres sont susceptibles de coulisser le long de ladite pièce de fixation (2).
- Un mécanisme de libération / fixation des barres (6) par rapport à la pièce de fixation (2).

2. Support pour découper du jambon à plusieurs positions, selon la revendication 1 **caractérisé par le fait que** la pièce de fixation (2) est dotée d'un bord externe aigu (18) et d'une partie inférieure légèrement en retrait par rapport audit bord (18), qui délimite la séparation de la partie inférieure (20) de ladite pièce (2).

3. Support pour découper du jambon à plusieurs positions, **caractérisé par le fait que** la structure d'appui (1) possède un vide pratiqué en correspondance avec la base de la pièce de fixation (2), de façon à ce que la partie inférieure (20) de la pièce de fixation (2) s'insère et adhère ou se visse à celle-ci par la partie inférieure.

4. Support pour découper du jambon à plusieurs positions, selon la revendication 1 **caractérisé par le fait que** la pièce de fixation (2) possède un trou aveugle (4) et un trou de passage (16) situés de façon alignée l'un avec l'autre.

5. Support pour découper du jambon à plusieurs positions, selon les revendications 1 et 4, **caractérisé par le fait que** le mécanisme de fixation / libération des barres (6) par rapport à la pièce de fixation (2) est formé par une partie inférieure (17) qui constitue le support des barres (6), le trou aveugle (4) et le trou de passage (16) étant alignés avec la ligne définie entre les deux barres (6), de façon à ce qu'ils soient susceptibles d'être pressionnés ou libérés de cette pression par un levier (3) dotée d'une partie centrale excentrique (5); l'excentricité sur cette partie (5) est formée par une configuration ovale de ladite partie centrale, de façon à ce qu'elle possède un rayon majeur (21) et un rayon mineur (22).

6. Support pour découper du jambon à plusieurs positions, selon la revendication 1 **caractérisé par le fait que** l'une des extrémités des barres (6) est doté de pics (8), et la partie proche desdites barres est dotée à son extrémité d'une pièce également dotée de pics (7) substantiellement perpendiculaires auxdites barres.

7. Support pour découper du jambon à plusieurs positions, selon la revendication 1 **caractérisé par le fait qu'**il possède à une extrémité une union (9) entre les barres (6) et des rabats (23) de fixation dotés d'orifices (24) pour ladite union disposés sur un anneau (12). Ledit anneau (12) est concentrique à un corps giratoire (10) doté d'un rebord, et susceptible de loger un autre anneau (11) qui est disposé sur la partie opposée au rebord et qui possède un orifice doté d'un pas de vis (25) pour un levier (14) qui traverse également un passage (26) disposé sur le corps giratoire (10); il possède un dispositif de blocage sur l'anneau (12) formé par au moins une vis de fixation (13) de façon à établir une pression depuis l'anneau (12) qui le supporte contre l'anneau (10), qui lorsque est appliquée ladite pression, reste bloqué contre l'anneau (12).

8. Support pour découper du jambon à plusieurs positions, selon la revendication 1 **caractérisé par le fait qu'**il possède un renfort central (2.1) qui est disposé entre les deux parois externes de la pièce de fixation (2), de façon à éviter le déplacement des barres (6) se rapprochant entre elles, lorsqu'elles sont forcées par l'excentrique, cette pression étant exercée à travers des bagues - guides (4.1) qui possèdent une forme courbe adaptée à une partie du profil courbe desdites barres (6), de façon à ce que la pression entre les barres (6) et les bagues - guides (4) soit exercée sur la grande superficie commune.

9. Support pour découper du jambon à plusieurs positions, selon la revendication 1 **caractérisé par le fait qu'**il comprend un dispositif avec un anneau giratoire (11) doté d'un rebord (11.1) situé sur la partie extérieure dudit anneau (11); de façon à ce que ledit anneau possède une dimension inférieure à la mesure de la distance jusqu'à l'anneau central (12).

10. Support pour découper du jambon à plusieurs positions, selon la revendication 1 **caractérisé par le fait que** le corps en "U" que forment à leur extrémités les pics (7) dispose d'une forme coplanaire (28) avec les barres (6) de façon à présenter une superficie commune pour sa fixation à travers au moins une vis (29) de fixation, sans soudure, ladite vis étant disposée préférablement sur la partie inférieure.

11. Support pour découper du jambon à plusieurs positions, selon la revendication 9 **caractérisé par le fait que** la pièce (9) d'insertion de l'extrémité des barres (6) sur l'articulation à inclinaison variable qui supporte l'anneau giratoire (11), est dotée de deux orifices opposés (9.1) pour l'inclinaison et de deux orifices parallèles (9.2) pour l'insertion et la fixation des barres (6).
